# EUROPÄISCHE PATENTSCHRIFT

(11) **EP 1 580 452 B1**
(45) Veröffentlichungstag und Bekanntmachung des Hinweises auf die Patenterteilung: **19.03.2008**
(21) Anmeldenummer: 05001780.5
(22) Anmeldetag: 28.01.2005
(51) Int. Cl.: F16F 13/26, B60K 5/12

(54) **Hydraulisch gedämpftes Aggregatelager für Kraftfahrzeuge**
Hydraulically damped engine support for vehicles
Support de moteur à amortissement hydraulique pour véhicules

(30) Priorität: 26.03.2004 DE 102004015036
(43) Veröffentlichungstag der Anmeldung: 28.09.2005
(73) Patentinhaber: AUDI AG, 85045 Ingolstadt (DE)
(72) Erfinder: Vogel, Friedemann, 85080 Gaimersheim (DE)
(74) Vertreter: Asch, Konrad

(56) Entgegenhaltungen:
- EP-A- 0 480 459
- EP-A- 0 607 897
- EP-A- 1 249 636
- DE-A- 4 121 939
- DE-A1- 3 245 653
- DE-A1- 3 638 944
- DE-A1- 19 754 753
- US-A- 4 756 513
- US-A1- 2003 057 620

## Beschreibung

Die Erfindung betrifft ein hydraulisch gedämpftes Aggregatelager für Kraftfahrzeuge gemäß dem Oberbegriff des Patentanspruches 1.

Aus der EP-A-1 249 636 ist ein gattungsgemäßes Aggregatlager für Kraftfahrzeuge bekannt, mit einem mit dem Aggregat verbindbaren Lagerkern, einem karosseriefesten, becherförmigen Lagergehäuse, und mit zwei zwischen dem Lagerkern und dem Lagergehäuse angeordneten und funktionell voneinander getrennten, gummielastischen Lagerkörpern, an die zwei durch einen Düsenkörper unterteilte und mit Hydraulikflüssigkeit befüllte Hydraulikkammern anschließen, wobei die untere, den Lagerkörpern nicht unmittelbar benachbarte Hydraulikkammer von einer beweglichen Membrane begrenzt ist, die einen Ausgleichsraum unterhalb der Membrane im Lagergehäuse abschließt.

Ein weiteres Aggregatelager ist beispielsweise aus der DE 41 21 939 A1 bekannt, bei dem die statische Tragfunktion vornehmlich über einen ringförmigen, gummielastischen Lagerkörper erfolgt, in den ein zweiter gummielastischer Lagerkörper integriert ist, der wiederum mit dem Lagerkern zusammenwirkt. Das Aggregatelager weist neben seiner hydraulischen Dämpfungsfunktion über die Hydraulikkammern und den Düsenkörper ein zuschaltbares hydraulisches Tilgersystem auf, dessen Feder von der Blähsteifigkeit des erstgenannten Lagerkörpers und dessen Masse von der Flüssigkeitssäule eines zuschaltbaren hydraulischen Systems gebildet ist, wobei die Flüssigkeitssäule an die dem Lagerkörper benachbarten Hydraulikkammer angeschlossen ist.

Aus der US 4,756,513 ist weiter ein hydraulisches Motorlager bekannt, dessen Befestigungselemente mittels eines Elastomerkörpers, der einen Innenhohlraum aufweist, verbunden sind. In dem Innenhohlraum des Elastomerkörpers ist eine Dämpfungsflüssigkeit aufgenommen. Der Innenhohlraum des Elastomerkörpers ist mit einer nachgiebigen Membran verschlossen, wobei eine Trennwand vorgesehen ist, die den Innenhohlraum in eine erste und in eine zweite Kammer teilt. Die Trennwand selbst ist aus einem Metall oder aus einem Plastik hergestellt und weist ein Paar von Platten auf, die eine Dämpfungsöffnung als Strömungsverbindung zwischen den Kammern definieren. Ferner ist in Verbindung mit dieser Abtrennung ein Dämpfungselement vorgesehen, die mit einer Steuereinrichtung gekoppelt ist, mittels der das Dämpfungselement so angesteuert wird, dass dieses die Ausdehnung der Membran und die Versteifung derselben beeinflusst, um die Dämpfungseigenschaften des Lagers in gewünschter Weise zu beeinflussen.

Aus der DE 197 54 753 A1 ist weiter ein Hydrolager mit zwei in Reihe angeordneten Gummilagern bekannt, die jeweils einen mit einem flüssigen oder gasförmigen Medium gefüllten Hohlraum aufweisen. In den Hohlraum mündet eine Hydraulikleitung, über die das flüssige oder gasförmige Medium in den Hohlraum einzubringen bzw. aus dem Hohlraum zu entfernen ist.

Aus der EP 0 607 897 A2 ist ferner ein hydraulisch dämpfendes, aktives Motorlager bekannt, bei dem zur aktiven Beeinflussung der Motorbewegungen in niederfrequenten Bereichen vorgesehen ist, dass das Motorlager lediglich eine einzige, flüssigkeitsgefüllte Kammer aufweist, die auf einer Seite von der elastischen Gummiwandung und auf der anderen Seite von einem volumensteifen Gehäuse begrenzt und an eine externe hydraulische Druckwelle angeschlossen ist, über die der Flüssigkeitsdruck in der Arbeitskammer belastungsabhängig geregelt werden kann.

Aufgabe der Erfindung ist es, ein Aggregatelager vorzuschlagen, das hinsichtlich seiner statischen und dynamischen Eigenschaften verbessert an die Betriebsbedingungen in Kraftfahrzeugen anpassbar und baulich vereinfacht ausgebildet ist.

Diese Aufgabe wird mit den Merkmalen des Patentanspruches 1 gelöst. Vorteilhafte Weiterbildungen der Erfindung sind den weiteren Patentansprüchen entnehmbar.

Gemäß Anspruch 1 sind die beiden Lagerkörper ringförmig um den Lagerkern bzw. in dem Lagergehäuse angeordnet, wobei durch Zwischenschaltung eines im Querschnitt L-förmigen Zwischenringes in Hauptbelastungsrichtung (vertikal) gesehen der äußere Lagerkörper im Zusammenwirken mit dem Lagergehäuse und dem axial verlaufenden Abschnitt des Zwischenringes auf Schub und der innere Lagerkörper im Zusammenwirken mit dem tellerförmigen Lagerkern und dem radial verlaufenden und der oberen Hydraulikkammer zugewandten Abschnitt des Zwischenringes auf Druck beaufschlagt ist. Die gummielastischen Lagerkörper sind somit baulich günstig radial nebeneinander positioniert und können durch die funktionell getrennte Anordnung gezielt auf eine spezifische Blähsteifigkeit ausgelegt werden, die als Voraussetzung zu einer wirksamen hydraulischen Dämpfung anzusehen ist. Ferner können die axial in Tragrichtung und radial in Quer- und Längsrichtung des Kraftfahrzeuges wirkenden statischen Lagerhärten voneinander getrennt eingestellt und somit optimal abgestimmt werden.

Besonders vorteilhaft kann der äußere ringförmige Lagerkörper relativ dünnwandig ausgebildet und der Raum zwischen dem Lagergehäuse und der beweglichen Membrane mit einem unter Druck stehenden Gas beaufschlagt sein.

Damit teilt sich die statische Tragkraft zwischen dem Lagerkörper und dem unter Druck stehenden Ausgleichsraum auf, die beide der Last des Aggregates entgegenwirken; damit kann insbesondere die Ansprechempfindlichkeit des Aggregatelagers weiter verbessert werden.

Ferner ist erfindungsgemäß der innere Lagerkörper teilweise oder vollständig durch in den Lagerkörper hineinragende Abschnitte des Lagerkerns und/oder des Zwischenringes von einer Druckbeaufschlagung über die angrenzende Hydraulikkammer abgekoppelt. Auch diese Maßnahme ermöglicht eine gezielte Abstimmbarkeit der Blähsteifigkeit der Lagerkörper und ermöglicht somit, das Aggregatelager hydraulisch weitgehend "steif" zu schalten, z. B. um unerwünschten Aggregatebewegungen beim Beschleunigen oder Verzögern des Kraftfahrzeuges entgegenwirken.

Zur Schaffung eines ggf. zuschaltbaren Zusatzvolumens kann der von der beweglichen Membrane abgegrenzte Ausgleichsraum über eine Leitung an einen unter Druck stehenden und ein definiertes Gasvolumen aufweisenden Behälter angeschlossen sein und damit eine modifizierte Trag- und Dämpfungscharakteristik aufweisen. Das Zusatzvolumen kann des weiteren mit einem eigenen Dämpfungssystem als Feder ausgeführt sein.

In vorteilhafter Weiterbildung der Erfindung kann die von den Lagerkörpern abgewandte bzw. über den Düsenkörper abgetrennte Hydraulikkammer über eine hydraulische Druckmittelquelle und ein Druckregelventil mit Druck oder einem drucklosen Rücklauf in einer definierten Frequenz beaufschlagbar sein. Die Druckansteuerung zur Veränderung der wirksamen Lagerkraft erfolgt in der unteren Hydraulikkammer. Über den Drosselkanal in dem Düsenkörper pflanzt sich der Druck in die obere Kammer für niedrige Frequenzen fort. Bei höheren Frequenzen ergibt sich über die Trägheit der Flüssigkeitsmasse im Drosselkanal eine Abkopplung der Stützsteifigkeit der durch die bewegliche Membrane und die Druckbeauschlagung im Ausgleichsraum gebildeten Gasfeder.

Zur Schaffung eines aktiven Aggregatelagers kann ferner das Druckregelventil über ein elektronisches Steuerventil angesteuert sein, welches neben motorspezifischen Parametern wie Motordrehzahl und Lastanforderung des Antriebsaggregates über Sensoren die Aggregatbeschleunigungen und Karosseriebeschleunigungen erfasst und durch entsprechende Drucksteuerung den Aggregatbewegungen (Stuckern) und unerwünschten Aggregateschwingungen entgegenwirkt.

Insbesondere kann dabei in einer an sich bekannten feed back Regelung des Steuergerätes unter Berücksichtigung der momentan anliegenden Beschleunigungswerte von Karosserie und Aggregat eine Drucksteuerung des Aggregatelagers erfolgen, aus der eine Minimierung der den Fahrkomfort beeinträchtigenden Karosserieschwingungen resultiert; das Aggregat kann dabei als Tilgermasse wirken.

Schließlich kann anstelle der beweglichen Membrane ein gummielastischer Tragkörper innerhalb des Lagergehäuses an die untere Hydraulikkammer anschließen bzw. den Ausgleichsraum bilden, der ebenfalls in Kombination mit dem ringförmigen Lagerkörper die statische Tragkraft des Aggregatelagers bestimmt.

Zwei Ausführungsbeispiele der Erfindung sind im folgenden mit weiteren Einzelheiten näher erläutert. Die schematische Zeichnung zeigt in:
- **Fig. 1**: einen Längsschnitt durch ein hydraulisch gedämpftes Aggregatelager für Kraftfahrzeuge, das hydraulisch mit einer Druckmittelquelle und einem Druckregelventil sowie pneumatisch mit einer Gasfeder verbunden ist; und
- **Fig. 2**: eine Vorrichtung zur Regelung des hydraulisch gedämpften **Aggregate**lagers abhängig von fahrzeugspezifischen Parametern.

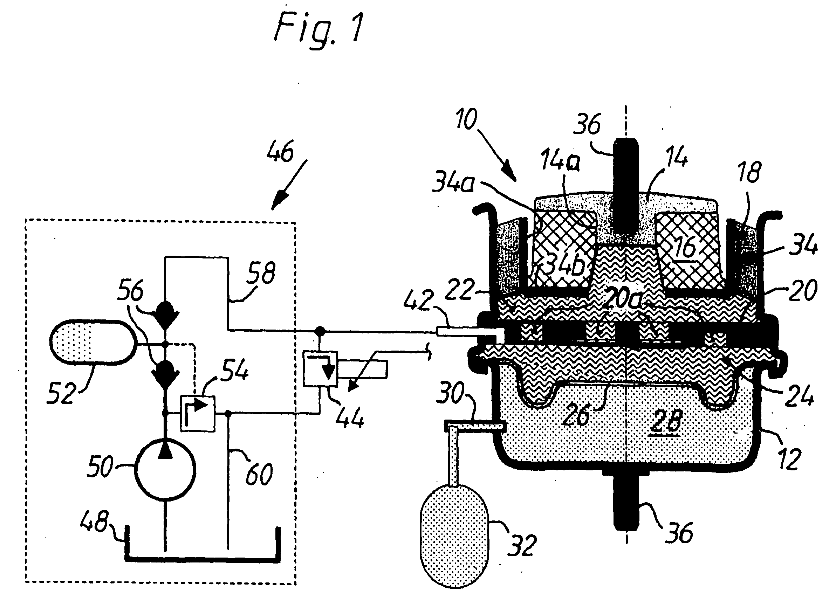

In der **Fig. 1** ist mit 10 ein hydraulisch gedämpftes Aggregatelager bezeichnet, das sich im wesentlichen aus einem becherförmigen Lagergehäuse 12, einem im Querschnitt etwa tellerförmigen Lagerkern 14, zwei gummielastischen Lagerkörpern 16, 18 und einem etwa scheibenförmigen Düsenkörper 20 zusammensetzt.

Der Düsenkörper 20 ist in das zweiteilig ausgeführte Lagergehäuse 12 dicht eingesetzt und unterteilt dieses in zwei Hydraulikkammern 22, 24, die mit einer inkompressiblen Hydraulikflüssigkeit befüllt sind. In dem Düsenkörper 20 sind nicht näher dargestellte Drosselkanäle 20a ausgeführt, die bei statischer und dynamischer Belastung des Aggregatelagers 10 in bekannter Weise einen Flüssigkeitsaustausch zulassen oder über einen definierten Bereich hinaus unterbinden.

Ferner ist im Verbindungsbereich 12a des zweiteiligen Lagergehäuses 12 eine bewegliche Membrane 26 eingespannt, die den unteren Hydraulikraum 24 von einem im Bodenbereich des Lagergehäuses 12 gebildeten Ausgleichsraum 28 trennt.

Der Ausgleichsraum 28 ist über eine Leitung 30 mit einem Behälter 32 definierten Volumens verbunden, in dem ein unter Druck stehendes Gas (z.B. Luft) gespeichert ist.

Das Lagergehäuse 12 ist nach oben dem Lagerkern 14 zu dicht abgeschlossen. Dazu ist der äußere, ringförmige und relativ dünnwandige Lagerkörper 18 durch Vulkanisieren dicht mit dem Lagergehäuse 12 und dem axial verlaufenden Abschnitt 34a eines im Querschnitt L-förmigen Zwischenringes 24 fest verbunden.

Der anschließende, innere Lagerkörper 16 ist mit dem radial verlaufenden Abschnitt 34b des Zwischenringes 34 und dem axial darüber liegenden Lagerkern 14 fest verbunden, wobei der Lagerkern 14 wie ersichtlich teilweise in den ringförmigen Lagerkörper 16 hineinragt. Ferner ist ersichtlich, dass der ringförmige Lagerkörper 16 mit seiner Außenumfangsfläche nicht an dem axialen Abschnitt 34a des z.B. aus Stahl hergestellten Zwischenringes 34 anliegt.

Durch die vorstehend beschriebene Anordnung der Lagerkörper 16, 18 und des Zwischenringes 34 wird der äußere Lagerkörper 18 in der Hauptbelastungsrichtung des Aggregatelagers 10 (entsprechend der eingezeichneten Mittellinie) auf Schub (= weich) und der radial dazu innere Lagerkörper 18 auf Druck (=hart) beansprucht. In den senkrecht dazu liegenden Belastungsrichtungen wird der Lagerkörper 16 auf Druck (= hart) und der Lagerkörper 18 auf Schub (= weich) belastet.

Die oberhalb des Düsenkörpers 20 positionierte Hydraulikkammer 22 grenzt bezüglich des äußeren, dünnwandigen Lagerkörpers 18 wie ersichtlich nur an dessen schmale, ringförmige Stirnfläche an und kann diesen deshalb bei einer hydraulischen Druckbeaufschlagung wenig verformen (hohe bzw. gezielte Einstellbarkeit der Blähsteifigkeit).

Gleiches gilt für den unmittelbar an die Hydraulikkammer 22 angrenzenden Bereich des inneren Lagerkörpers 18, der durch den in den Lagerkörper 18 hineinragenden, axial verlaufenden Abschnitt 14a des Lagerkerns 14 noch verkürzt ist. Der besagte Bereich könnte durch Verlängerung des axial verlaufenden Abschnittes 14a des Lagerkerns 14 oder durch einen entsprechend gegengerichteten, axial nach oben verlaufenden Abschnitt am Zwischenring 34 gänzlich eliminiert sein.

Andererseits ist der radial verlaufende Abschnitt 34b des Zwischenringes 34 über die Druckbeaufschlagung des inneren Lagerkörpers 16 gegenüber der Hydraulikkammer 22 ausreichend steif abgestützt.

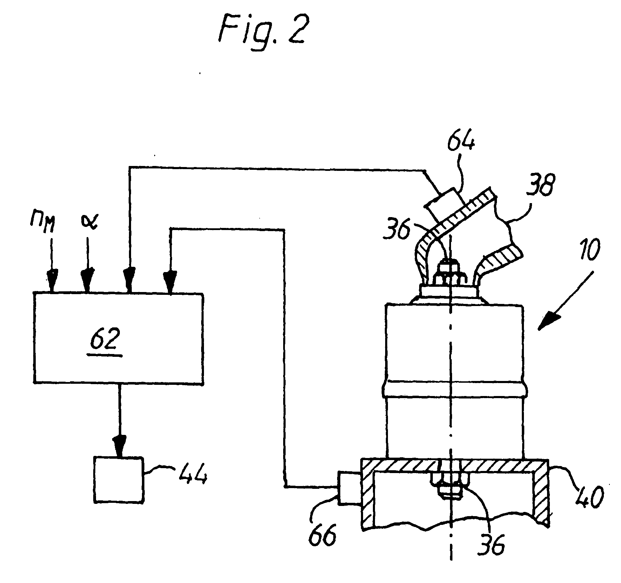

Der Lagerkern 14 ist mittels einer allgemein mit 36 bezeichneten Schraubverbindung (vgl. auch Fig. 2) mit einer nur teilweise dargestellten, biegesteifen Stütze 38 verbunden. Die Stütze 38 ist Teil einer Aggregatelagerung für Kraftfahrzeuge mit mehreren entsprechend angeordneten Stützen 38 und Aggregatelagern 10. Über eine weitere Schraubverbindung 36 ist das Aggregatelager 10 an einer Tragstruktur 40 der Karosserie des Kraftfahrzeuges oder ggf. an einem Hilfsrahmen befestigt.

Durch den aufgebrachten Gasdruck in dem Ausgleichsraum 28, der sich als hydraulischer Druck in die obere Hydraulikkammer 22 fortpflanzt, wird die von dem Antriebsaggregat ausgeübte statische Vorlast teilweise kompensiert, so dass die Lagerkörper 16, 18 bzw. insbesondere der äußere Lagerkörper 18 die statische Belastung nur teilweise aufnehmen müssen. Dies vermindert die Dauerbelastung der Lagerkörper 16, 18 und erhöht wesentlich die Ansprechempfindlichkeit des Aggregatelagers 10 auch in der dynamischen Beanspruchung.

Die durch den Gasdruck aufgebrachte Vorlast könnte durch entsprechende Drucksteuerung oder durch Ausbildung des Behälters 32 (Zusatzvolumen) als Feder und/oder durch Zu- und Abschalten des Behälters 32 von dem Ausgleichsraum 28 weiter beeinflusst werden.

Bei einer Ausbildung des soweit beschriebenen Aggregatelagers 10 (zweites Ausführungsbeispiel) als aktives Aggregatelager (Aktor) ist die unterhalb des Düsenkörpers 20 positionierte Hydraulikkammer 24 über eine Leitung 42 (vgl. **Fig. 1****)** mit einem elektromagnetisch betätigten Druckregelventil 44 (z.B. einem sogenannten Taktventil) verbunden. Mit der Druckbeauschlagung des Aggregatelagers 10 bzw. der unteren Hydraulikkammer 24 kann die Lagerkraft im Fahrbetrieb gezielt verändert werden.

Dabei pflanzt sich der eingesteuerte, höhere Druck über die Drosselkanäle 20a in die obere Hydraulikkammer 22 für niedrige Frequenzen fort. Bei höheren Frequenzen erfolgt über die Trägheit der Flüssigkeitsmasse in den Drosselkanälen 20a eine Abkopplung der Stützsteifigkeit aus dem Gasdruck im Ausgleichsraum 28.

Ändert sich ferner das vom Antriebsaggregat abgegebene Antriebsmoment - z.B. durch einen plötzlichen Beschleunigungsvorgang - kann der Druck im Aggregatelager 10 derart geregelt werden, dass eine Einfederung des Aggregatelagers 10 bzw. eine entsprechende Verlagerung oder ein Kippen des Antriebsaggregates unterbunden wird.

Zur besagten Drucksteuerung ist das Druckregelventil 44 mit einer Druckquelle 46 verbunden, die im wesentlichen einen Hydrauliksumpf 48, eine Pumpe 50, einen Druckspeicher 52, ein Überdruckventil 54 und Rückschlagventile 56 aufweist. Das Druckregelventil 44 ist dabei an eine unter Druck stehende Vorlaufleitung 58 und an eine drucklose Rücklaufleitung 60 angeschlossen und verbindet diese im Betrieb alternativ mit der Leitung 42 zur Hydraulikkammer 24.

Eine derartige Drucksteuerung und/oder -regelung kann grundsätzlich auch bei von der obigen Beschreibung abweichenden hydraulisch gedämpften Aggregatelagern mit einer entsprechenden Regel- und/oder Steuereinrichtung erfolgen.

Die elektrische Ansteuerung des Druckregelventils 44 (vgl. **Fig. 2**) erfolgt mittels eines elektronischen Steuergerätes 62, dem neben spezifischen Daten des Antriebsaggregates wie Motordrehzahl n_{M}, Lastanforderung (z.B. Gaspedalstellung) α, die Beschleunigungswerte von Sensoren 64, 66 zugeführt und in dem Steuergerät 62 verarbeitet bzw. logisch verknüpft werden. Über eine Verstärkerstufe in dem Steuergerät 62 wird dann das Druckregelventil 44 angesteuert.

Die Steuerung des Druckregelventils 44 kann in einer feed back Regelung nach den gerade anliegenden Betriebsbedingungen des Kraftfahrzeuges erfolgen, indem die gemessenen Beschleunigungswerte von den Sensoren 64, 66 in einer Regelstrategie durch veränderte Drucksteuerung und Heranziehung des Antriebsaggregates als Tilgermasse so optimiert wird, dass eine Schwingungsreduzierung der Karosserie 40 zur Verbesserung des Fahrkomforts des Kraftfahrzeuges erzielt wird.

Die Beschleunigungssensoren 64, 66 können auch an anderen, geeigneten Stellen angeordnet sein, z.B. der Beschleunigungssensor 66 an einem Federbeindom der Karosserie des Kraftfahrzeuges.

Anstelle der beweglichen Membrane 26 und/oder des mit Gasdruck beaufschlagten Ausgleichsraumes 28 könnte auch ein gummielastischer, geschlossen poriger bzw. flüssigkeitsresistenter Lagerkörper vorgesehen sein, der im Lagergehäuse 12 angeordnet ist und unmittelbar an die untere Hydraulikkammer 24 zur Erzeugung der beschriebenen Vorspannung angrenzt.

## Patentansprüche

1. Hydraulisch gedämpftes Aggregatelager für Kraftfahrzeuge, mit einem mit dem Aggregat verbindbaren Lagerkern (14), einem karosseriefesten, becherförmigen Lagergehäuse (12), zwei zwischen dem Lagerkern (14) und dem Lagergehäuse (12) angeordneten und funktionell voneinander getrennten, gummielastischen Lagerkörpern (16, 18), an die zwei durch einen Düsenkörper (20) unterteilte und mit Hydraulikflüssigkeit befüllte Hydraulikkammern(22, 24) anschließen, wobei die untere, den Lagerkörpern (16, 18) nicht unmittelbar benachbarte Hydraulikkammer (24) von einer beweglichen Membrane (26) begrenzt ist, die einen Ausgleichsraum (28) unterhalb der Membrane (26) im Lagergehäuse (12) abschließt, **dadurch gekennzeichnet, dass** die beiden Lagerkörper (16, 18) ringförmig um den Lagerkern (14) bzw. in dem Lagergehäuse (12) angeordnet sind, wobei durch Zwischenschaltung eines im Querschnitt L-förmigen Zwischenringes (34) in Hauptbelastungsrichtung (vertikal) gesehen der äußere Lagerkörper (18) im Zusammenwirken mit dem Lagergehäuse (12) und dem axial verlaufenden Abschnitt (34a) des Zwischenringes (34) mit einer Schubkraft und der innere Lagerkörper (16) im Zusammenwirken mit dem tellerförmigen Lagerkern (14) und dem radial verlaufenden und der oberen Hydraulikkammer (22) zugewandten Abschnitt (34b) des Zwischenringes (34) auf Druck beaufschlagt ist, wobei der innere Lagerkörper (16) teilweise oder vollständig durch in den Lagerkörper (16) hineinragende Abschnitte (14a) des Lagerkerns (14) und/oder des Zwischenringes (34) von einer Druckbeaufschlagung über die angrenzende Hydraulikkammer (22) abgekoppelt ist.

2. Aggregatelager nach Anspruch 1, **dadurch gekennzeichnet, dass** der äußere, ringförmige Lagerkörper (18) relativ dünnwandig ausgebildet ist und dass der Ausgleichsraum (28) zwischen dem Lagergehäuse (12) und der beweglichen Membrane (26) mit einem unter Druck stehenden Gas beaufschlagt ist.

3. Aggregatelager nach einem der vorhergehenden Ansprüche, **dadurch gekennzeichnet, dass** der von der beweglichen Membrane (26) abgegrenzte Ausgleichsraum (28) über eine Leitung (30) an einen unter Druck stehenden und ein definiertes Gasvolumen aufweisenden Behälter (32) angeschlossen ist.

4. Aggregatelager nach einem der vorhergehenden Ansprüche, **dadurch gekennzeichnet, dass** die von den Lagerkörpern (16, 18) abgewandte bzw. über den Düsenkörper (20) abgetrennte Hydraulikkammer (24) über eine hydraulische Druckmittelquelle (46) und ein Druckregelventil (44) mit Druck oder einem drucklosen Rücklauf in definierten Frequenzen beaufschlagbar ist.

5. Aggregatelager nach Anspruch 4, **dadurch gekennzeichnet, dass** das Druckregelventil (44) über ein elektronisches Steuerventil 62) angesteuert ist, welches neben motorspezifischen Parametern wie Motordrehzahl und Lastanforderung über Sensoren (64, 66) die Aggregatbeschleunigungen und Karosseriebeschleunigungen erfasst und durch entsprechende Drucksteuerung den Aggregatbewegungen und Aggregateschwingungen aktiv entgegenwirkt.

6. Aggregatelager nach Anspruch 4 oder 5, **dadurch gekennzeichnet, dass** in einer feed-back-Regelung des Steuergerätes (62) unter Berücksichtigung der momentan anliegenden Beschleunigungswerte von Karosserie (40) und Antriebsaggregat (Stütze 38) eine Drucksteuerung des Aggregatelagers (10) erfolgt, die eine Minimierung der den Fahrkomfort beeinträchtigenden Karosserieschwingungen ergibt.

7. Aggregatelager nach einem der vorhergehenden Ansprüche, **dadurch gekennzeichnet, dass** anstelle der beweglichen Membrane (26) ein gummielastischer Tragkörper innerhalb des Lagergehäuses (12) an die untere Hydraulikkammer (24) anschließt bzw. den Ausgleichsraum (28) bildet.

## Claims

1. A hydraulically damped engine support for vehicles, with a support core (14) that can be connected to the engine, a body-fixed, beaker-shaped support housing (12), two rubber-elastic support elements (16, 18) arranged between the support core (14) and the support housing (12) and separated from one another, to which elements are connected two hydraulic chambers (22, 24) divided by a nozzle element (20) and filled with hydraulic fluid, wherein the lower hydraulic chamber (24) that is not immediately adjacent to the support elements (16, 18) is bounded by a moving membrane (26) which seals a compensating space (28) underneath the membrane (26) in the support housing (12), **characterised in that** both support elements (16, 18) are arranged annularly around the support core (14) or in the support housing (12), wherein the insertion of an intermediate ring (34), L-shaped in cross-section, viewed in the main loading direction (vertical), exerts pressure on the outer support element (18), interacting with the support housing (12) and the axially running section (34a) of the intermediate ring (34) with a shearing force, and the inner support element (16) interacting with the plate-shaped support core (14) and the radially running section (34b) of the intermediate ring (34) facing the upper hydraulic chamber (22), and wherein the inner support element (16) is partially or completely uncoupled by sections (14a) of the support core (14) and/or of the intermediate ring (34) by pressurisation via the adjoining hydraulic chamber (22), which sections project into the support element (16).

2. The engine support according to Claim 1, **characterised in that** the outer, annular support element (18) is designed with a relatively thin wall, and n that the compensating space (28) between the support housing (12) and the moving membrane (26) is loaded with a gas under pressure.

3. The engine support according to one of the preceding claims, **characterised in that** the compensating space (28) bounded by the moving membrane (26) is connected by a pipe (30) to a tank (32) that is under pressure and has a defined gas volume.

4. The engine support according to one of the preceding claims, **characterised in that** the hydraulic chamber (24) facing away from the support elements (16, 18) and separated by the nozzle element (20) can be loaded via a hydraulic pressure medium source (46) and a pressure regulating valve (44) with pressure and a pressure-less return in defined frequencies.

5. The engine support according to Claim 4, **characterised in that** the pressure regulating valve (44) is actuated by an electronic control valve (62)(which, in addition to the engine-specific parameters, such as engine speed and load requirement, records the engine accelerations and body accelerations by means of sensors (64, 66) and actively counteracts the engine movements and engine vibrations by suitable pressure control.

6. The engine support according to Claim 4 or 5, **characterised in that** a pressure control of the engine support (10) is provided in a feed-back regulation of the control unit (62), taking into consideration the current acceleration values of the body (4) and the drive unit (support 38), which pressure control minimises the body vibrations impairing driving comfort.

7. The engine support according to one of the preceding claims, **characterised in that** instead of the moving membrane (26), a rubber-elastic support element is connected inside the support housing (12) to the lower hydraulic chamber (24), forming the compensating space (28).

## Revendications

1. Palier de groupe à amortissement hydraulique pour véhicules automobiles, comprenant un noyau de palier (14) pouvant être relié au groupe, un boîtier de palier (12) en forme de bac fixé à la carrosserie, deux corps de palier élastiques (16, 18) disposés entre le noyau de palier (14) et le boîtier de palier (12) et fonctionnellement séparés l'un de l'autre, auxquels se raccordent deux chambres hydrauliques (22, 24) divisées par un corps de buse (20) et remplies de fluide hydraulique, la chambre hydraulique inférieure (24), non directement adjacente aux corps de palier (16, 18), étant délimitée par une membrane mobile (26), qui ferme une chambre de compensation (28) sous la membrane (26) dans le boîtier de palier (12), **caractérisé en ce que** les deux corps de palier (16, 18) sont disposés en anneau autour des noyaux de palier (14) et/ou dans le boîtier de palier (12), sachant qu'en intercalant une rondelle d'écrou (34) en section transversale en L vue dans la direction de sollicitation principale (verticale), le corps de palier extérieur (18) en coopération avec le boîtier de palier (12) et la section s'étendant axialement (34a) de la rondelle d'écrou (34) est sollicité par une force de cisaillement et le corps de palier interne (16) en coopération avec le noyau de palier en forme de plateau (14) et la section (34b) de la rondelle d'écrou (34) s'étendant radialement et tournée vers la chambre hydraulique supérieure (22) est sollicité par une pression, le corps de palier interne (16) étant découplé en partie ou entièrement à travers les sections (14a) du noyau de palier (14) et/ou de la rondelle d'écrou (34) dépassant dans le corps de palier (16) par une sollicitation de pression au-dessus de la chambre hydraulique adjacente (22).

2. Palier de groupe selon la revendication 1, **caractérisé en ce que** le corps de palier extérieur annulaire (18) est conçu avec des parois relativement minces et **en ce que** la chambre de compensation (28) entre le boîtier de palier (12) et la membrane mobile (26) est sollicité par un gaz sous pression.

3. Palier de groupe selon l'une quelconque des revendications précédentes, **caractérisé en ce que** la chambre de compensation (28) délimitée par la membrane mobile (26) est raccordée par une conduite (30) à un récipient (32) sous pression et comprenant un volume de gaz défini.

4. Palier de groupe selon l'une quelconque des revendications précédentes, **caractérisé en ce que** la chambre hydraulique (24) opposée aux corps de palier (16, 18) et/ou séparée par le corps de buse (20) peut être sollicitée par une source de moyen de pression hydraulique (46) et une soupape de régulation de pression (44) avec une pression ou un reflux sans pression dans des fréquences définies.

5. Palier de groupe selon la revendication 4, **caractérisé en ce que** la soupape de régulation de pression (44) est commandée par une soupape de commande électronique (62), laquelle détecte par des capteurs (64, 66), en plus des paramètres spécifiques au moteur comme la vitesse de rotation du moteur et l'exigence de contrainte, les accélérations du groupe et les accélérations de la carrosserie et grâce à une commande de pression correspondante s'oppose activement aux déplacements du groupe et aux vibrations de la carrosserie.

6. Palier de groupe selon la revendication 4 ou 5, **caractérisé en ce que** dans une régulation par rétroaction de l'appareil de commande (62), en prenant en compte les valeurs d'accélération momentanément présentes de la carrosserie (40) et du groupe d'entraînement (appui 38), il s'effectue une commande de pression du palier de groupe (10), qui réduit au minimum les vibrations de la carrosserie altérant le confort de conduite.

7. Palier de groupe selon l'une quelconque des revendications précédentes, **caractérisé en ce qu'**en lieu et place de la membrane mobile (26), un corps d'appui élastique à l'intérieur du boîtier de palier (12) est raccordé à la chambre hydraulique inférieure (24) et/ou forme la chambre de compensation (28).
